# EUROPEAN PATENT SPECIFICATION

(11) **EP 3 374 141 B1**
(45) Date of publication and mention of the grant of the patent: **23.03.2022**
(21) Application number: 16864800.4
(22) Date of filing: 04.11.2016
(51) Int. Cl.: B29C 45/02, B29C 45/76, B29K 105/00, B29C 45/27

(54) **SHOOTING POT REFILL CONTROL**
STEUERUNG DER NACHFÜLLUNG EINES SPRITZTOPFES
COMMANDE DE REMPLISSAGE DE POT D'INJECTION

(30) Priority: 11.11.2015 US 201562253856 P
(43) Date of publication of application: 19.09.2018
(73) Proprietor: Husky Injection Molding Systems Ltd., Bolton, ON L7E 5S5 (CA)
(72) Inventor: BELZILE, Manon Danielle, Enosburg Falls, Vermont 05450 (US); DEZON-GAILLARD, Patrice Fabien, Enosburg Falls, Vermont 05450 (US); PLUMPTON, James Osborne, Enosburg Falls, Vermont 05450 (US)
(74) Representative: HGF
(86) International application number: PCT/US2016/060461
(87) International publication number: WO 2017/083184

(56) References cited:
- US-A- 4 921 416
- US-A1- 2004 166 189
- US-A1- 2006 068 050
- US-A1- 2008 111 265
- US-A1- 2009 206 501
- US-A1- 2012 276 235
- US-A1- 2012 306 113
- Anonymous: "Flash", , 25 July 2010 (2010-07-25), XP055772170, web.archive.org Retrieved from the Internet: URL:https://web.archive.org/web/2010072521 3645/https://www.dc.engr.scu.edu/cmdoc/dg_ doc/develop/trouble/flash/fe000001.htm [retrieved on 2021-02-04]

## Description

### TECHNICAL FIELD

The present disclosure relates to injection molding machines and in particular to shooting pots.

### BACKGROUND

Injection molding machines generally include a hopper for receiving resin, a barrel connected to the hopper and a screw that moves within the barrel to impart a force onto the resin to melt and move the resin along the barrel. The melted resin is injected from the barrel into a melt passage apparatus that defines one or more melt passage. The melted resin passes through the melt passage(s) to one or more nozzle. The melted resin is then expelled into a mold cavity through a gate. The mold cavity can be formed by clamping two mold plates together. US2012/276235 describes controlling shooting-pots independently and US2009/206501 describes fill speed control.

### SUMMARY

In one aspect, disclosed is a method of filling a shooting pot cavity in a molding system, the method comprising: injecting resin from an injection unit into a refill melt passage, which fluidly connects the injection unit and the shooting pot cavity, to fill the shooting pot cavity; measuring a property of the resin at a predetermined location in the molding system; determining that the measured property is outside of a threshold range for the property, the threshold range being associated with the predetermined location; selecting an operational parameter to adjust, the operational parameter associated with the measured property and the predetermined location, wherein the operational parameter comprises a volume of resin in a filled shooting pot cavity; and adjusting the volume of resin to change the measured property of the resin at the predetermined location; wherein measuring a property of the resin comprises sensing a pressure of the resin at the predetermined location.

The method may also comprise: retrieving the identification of the operational parameter(s) from a database; and automatically adjusting, during the refill of a shooting pot during an injection cycle, the operational parameter to adjust the property at the predetermined location.

In another aspect disclosed is a control system for controlling a refill of a shooting pot cavity in a molding system, the control system comprising: a sensor for measuring a property of the resin at a predetermined location of the molding system; a database; a controller connected to the sensor and to the database, the controller configured to execute instructions stored on a memory to perform the one of the aforementioned methods.

### BRIEF DESCRIPTION OF THE DRAWINGS

Figure 1 is a cross sectional side view of a molding system.
Figure 2 is a side view of a portion of the molding system of Figure 1.
Figures 3A, 3B, 3C and 3D are side views of a showing pot in various stages of operation.
Figure 4 is a flowchart depicting an exemplary method of refilling a shooting pot in a molding system.
Figures 5A and 5B are graphs showing the monitoring window and data acquisition rate.
Figure 6 is a flowchart depicting an exemplary method of automatically adjusting an operational parameter during the refill of a shooting pot in a molding system.

The drawings are not necessarily to scale and may be illustrated by phantom lines, diagrammatic representations and fragmentary views. In certain instances, details that are not necessary for an understanding of the embodiments or that render other details difficult to perceive may have been omitted. Like reference numerals are used in the drawings to identify like elements and features.

### DETAILED DESCRIPTION

Disclosed generally is a method and system for controlling the filling or refilling of shooting pots in a hot runner of a molding system such as in an injection molding machine. Implementing this method or system can reduce the wear on components in the molding system, can increase the efficiency in filling or refilling the shooting pots and can increase the quality and consistency of the resulting molded parts.

A property of the resin, such as the pressure of the resin or the temperature of the resin, is measured at a location in the molding system between the melt source and the mold gate. This measurement is taken at some point during (or throughout) the injection cycle or during and throughout the shooting pot refill or fill process. These measurements are compared to similar data taken from a reference injection cycle (also called a threshold range or threshold data).

If the measured property is different from similar data taken from the reference injection cycle or outside the threshold range then an operational parameter is automatically identified for adjustment in order to attempt to bring the measured property back to being similar to the data taken from the reference injection cycle. The operational parameter is some function or component related to the molding system that can be changed in order to change the measured property of the resin. Examples of operational parameters can include the refill flow rate, the temperature of the resin in the injection unit or the hold pressure in the injection unit.

The operating parameter can then be adjusted or automatically adjusted in incremental amounts on each injection cycle until the measured property is back to being similar to the relevant data in the reference injection cycle.

Using this system and method, multiple shooting pots and hot runners (or hot runner channels) can be filled and refilled independently. In other words, different shooting pots can be refilled in accordance with different reference injection cycles or having different conditions.

### The Molding System 100

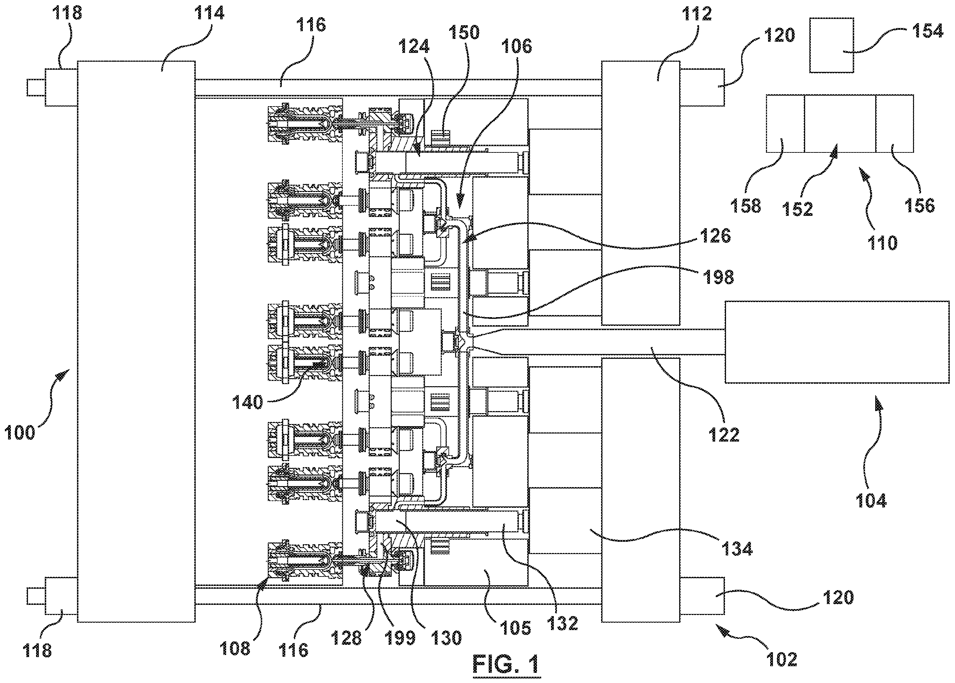

Figure 1 shows an example of a molding system 100. The molding system 100 includes a clamp assembly 102, an injection unit 104, a melt distribution assembly 106, a mold assembly 108 and a control system 110. In the illustrated embodiments the molding system 100 is used for manufacturing preforms. In alternative embodiments, the molding system 100 can be adapted to manufacture other molded articles, such as thin wall containers for subsequent blow molding into final shaped containers, medical appliances, and closures.

The clamp assembly 102 includes a stationary platen 112, a movable platen 114, tie bars 116, a lock unit 118 and a clamp unit 120. Alternatively, the clamp assembly 102 can have three platens with a movable platen moving between two stationary platens.

The injection unit 104 in the Figures 1 is shown in schematic. The injection unit 104 generally includes a hopper or other inlet, a barrel, a screw and a machine nozzle 122. The hopper or other inlet is an opening connected to the barrel and is used to receive resin. The resin passes through the hopper or other inlet into the barrel. The screw is housed in the barrel and can rotate and move linearly to melt and move the resin in the barrel. There may be alternative or additional ways of melting or moving the resin, such as using heaters on the barrel.

The machine nozzle 122 is connected to an end of the barrel. The machine nozzle 122 provides a passage from the melted resin to the melt distribution assembly 106. For example, the screw can inject the resin from the barrel through the machine nozzle 122 and into the melt distribution assembly 106. Different mechanisms for transferring resin to the melt distribution assembly 106 can be used, such as a machine shooting pot. The machine nozzle 122 can pass through a plate 105 proximate the fluid connection of the machine nozzle 122 and melt distribution assembly 106.

The melt distribution assembly 106 includes a manifold 126 defining refill passages 198 and injection passages 199, one or more shooting pots 124, and one or more nozzle assemblies 128. For ease of reference the manifold is not fully shown in Figure 1.

The refill melt passages 198 extend from an outlet of the machine nozzle 122. The outlet of the machine nozzle 122 can fluidly connect to a bushing and the refill melt passage 198 can extend from the bushing, for example. The refill melt passage 198 branch from the outlet of the machine nozzle 122 or from the bushing and each fluidly connect to a shooting pot cavity 130. There may be multiple branches of the refill melt passage 198 between the machine nozzle 122 and the shooting pot cavity 130.

The shooting pots 124 each include a shooting pot cavity 130, a shooting pot plunger 132 and a shooting pot actuator 134. The refill melt passages 198 lead to an inlet to the shooting pot cavity 130. The refill melt passages 198 connecting the injection unit 104 to the shooting pot cavity 130 can also be called the refill circuit.

The shooting pot cavity 130 has an outlet, leading to a respective injection melt passage 199. Each shooting pot cavity 130 leads to a separate respective injection melt passage 199.

The mold assembly 108 includes a stationary mold portion and a movable mold portion that cooperate to define one or more mold cavities 140. The stationary mold portion is associated with the stationary platen 112. For example, the stationary mold portion can be connected to the stationary platen 112. The movable mold portion is associated with the movable platen 114. For example, when the movable platen 114 moves relative to the stationary platen 112 the movable mold portion similarly moves relative to the stationery mold portion. In Figure 1, the mold assembly 108 is shown in simplified form.

Each injection melt passage 199 leads eventually to a respective mold cavity 140. For example the injection melt passage 199 first leads to a shooting pot cavity 130 and then to a nozzle assembly 128 and then to the respective mold cavity 140. Generally Resin flows from the injection unit 104, through the refill melt passage 198 and into the shooting pot cavity 130. The resin is then expelled from the shooting pot cavity into the injection melt passage 199, through the nozzle assembly 128 and then into the mold cavity 140. As such the injection melt passage 199 may be partially defined in the nozzle assembly 128 and in the manifold 126, for example.

The mold cavities 140 are each fluidly connected to a respective outlet of the injection melt passage 199 for receiving resin.

The control system 110 includes a sensor 150, a controller 152 and a database 154. Another form of memory can be used instead of or in addition to a database 154. The database 154 can be remote from the control system 110. The control system 110 is generally shown in schematic in Figure 1.

The sensor 150 is used to measure a property of the resin at a predetermined location of the molding system 100. There can be more than one sensor 150. For example, there can be one sensor 150 associated with each shooting pot 124. Or there can be sensors 150 that measure different properties of the resin. Or there can be sensors 150 that measure properties of the resin at different (predetermined) locations in the molding system 100.

The sensor 150 can be a pressure sensor such as a bridge sensor (pressure transducer or load cell). The sensor 150 can be a temperature sensor such as a thermocouple such as a J or K type thermocouple. The sensor 150 can be a camera that can be used to measure dimensions of a molded part for example.

The one or more sensor 150 can be located at various predetermined locations. A pressure sensor can be located or disposed somewhere proximate the injection unit 104, the refill melt passage 198, or shooting pot 124 in order to measure the pressure of the resin in the refill circuit or shooting pot 124. Similarly, a pressure sensor can be located or disposed proximate to the injection unit 104 in order to measure the pressure on the resin in the injection unit 104, such as in the barrel or machine nozzle 122.

The one or more sensor 150 can be located proximate the shooting pot cavity 130 in order to measure a property of the resin within the shooting pot cavity 130. The one or more sensor 150 can be proximate to the mold cavity 140 in order to measure a property of the resin in the mold cavity 140, which can include measuring a property of a molded part that is formed in the mold cavity 140. Similarly, the one or more sensor 150 can be located proximate to the injection mold passage 199.

The controller 152 can include a computer or processor that can execute instructions stored on a memory. The memory can be considered part of the controller 152.

The controller 152 can communicate with the database 154 and the sensor 150. For example, the controller may communicate through a wireless or wired connection with the database 154 or sensor 150.

The controller 152 can be attached to a portion of the molding system 100. The controller 152 or control system 110 can be considered part of the molding system 100. Alternatively, the controller 152 can be remote from the molding system 100 and can communicate through a wired or wireless communication network with other components of the molding system such as the database 154 and sensor 150.

The database 154 is a physical memory for storing data such as measurements from the sensor 150 and instructions for the controller 152.

The control system 110 can also include a user interface 156. The user interface 156 can be connected to or be a part of the controller 152. The user interface 156 can be a display and can also have an input device. The input device can consist of a touch screen display, a keyboard, or buttons with specific associated functions, for example. The user interface 156 can have an output device, such as the display, speakers or lights that are illuminated in response to certain conditions (as dictated by the controller, for example).

The control system 110 can also include a timer 158 associated with the controller 152. The timer 158 can be used to time an injection cycle. By way of further example, the timer 158 can also be used to time specific operations in an injection cycle, such as the hold phase.

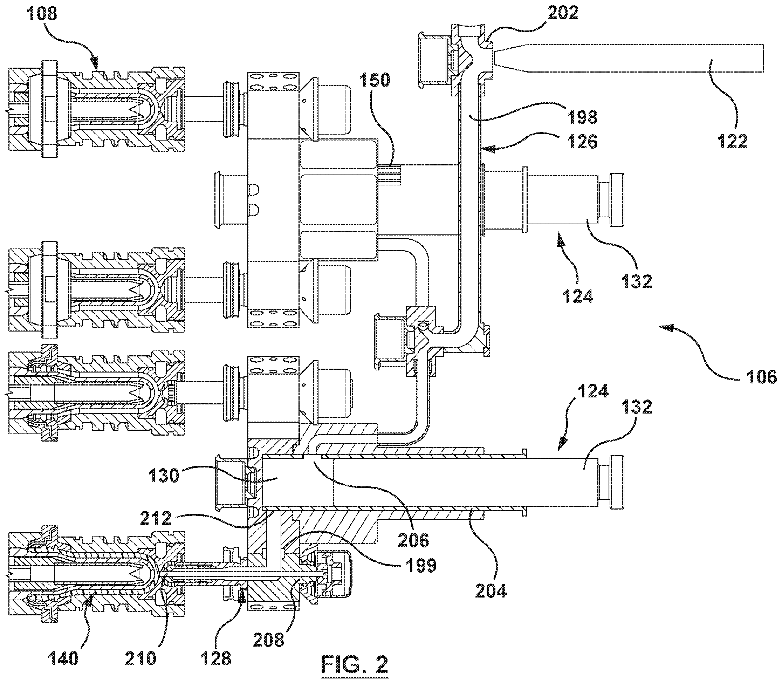

Figure 2 shows portions of the molding system 100 in more detail including the machine nozzle 122, a shooting pot 124, another shooting pot 124 shown cut away, a portion of the refill melt passage 198, an injection melt passage 199 , the nozzle assembly 128, and mold cavities 140.

In the depicted embodiments, the machine nozzle 122 connects to a splitter 202 at an inlet of the refill melt passage 198. The splitter 202 diverts the resin into two (or more) distinct portions of the refill melt passage 198. Each distinct portion of the refill melt passage 198 leads, eventually, to one or more shooting pot 124. A portion of the refill melt passage 198 is shown cut away. The refill melt passage 198 leads from the splitter 202 to a secondary splitter 202. The secondary splitter 202 again splits the refill melt passage 198 so that it leads to one or more shooting pot 124. A portion of the refill melt passage 198 leads from the secondary splitter 202 through a shooting pot inlet 206 to the shooting pot cavity 130. The shooting pot cavity 130 is defined within a shooting pot housing 204. The shooting pot inlet 206 is a fluid connection in between the shooting pot cavity 130 and the refill melt passage 198 for allowing resin to flow through. For example, the shooting pot inlet 206 can be a hole in the shooting pot housing 204 that is connected to the refill melt passage 198. The portion of the refill melt passage 198 that leads from the machine nozzle 122 to the shooting pot 124 (i.e. to the shooting pot cavity 130) can be called the "refill circuit." In implementations in which the sensor 150 is a pressure sensor, the sensor 150 can be disposed within or proximate to the refill circuit.

The shooting pot housing 204 has a shooting pot outlet 212 that leads to an injection melt passage 199 which in turn fluidly connects to or passes through a nozzle assembly 128. For example, the nozzle assembly 128 can define a portion of the injection melt passage 199. The shooting pot outlet 212 can be a hole in the shooting pot housing 204, for example. In the embodiment shown in Figure 2, the nozzle assembly 128 includes a valve gated nozzle assembly 128, a valve stem 208 and a nozzle outlet 210. The nozzle outlet 210 leads to (or fluidly connects to) a gate defined by the mold assembly 108. The gate is an opening into the mold cavity 140. The valve stem 208 is arranged and sized to reciprocate so as to open and shut the nozzle outlet 210, thereby allowing and blocking the resin, respectively, to flow out of the nozzle outlet 210.

The shooting pot housing 204 houses a shooting pot plunger 132. The shooting pot plunger 132 is arranged to reciprocate within the shooting pot housing 204. An actuator (not shown) is used to reciprocate the shooting pot plunger 132. The shooting pot plunger 132 is of such a size that when it moves towards the shooting pot outlet 212 it forces or expels the resin out of the shooting pot cavity 130 through the shooting pot outlet 212.

Separate or dedicated actuators can be used to reciprocate respective shooting pot plungers 132. In implementations when there are more than one shooting pots 124, one or more of the shooting pot plungers 132 can independently actuate.

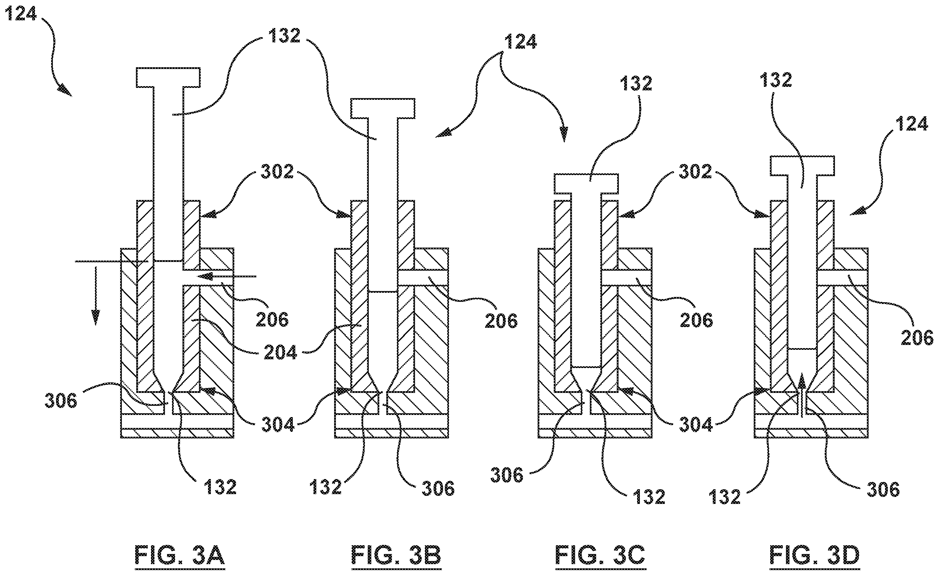

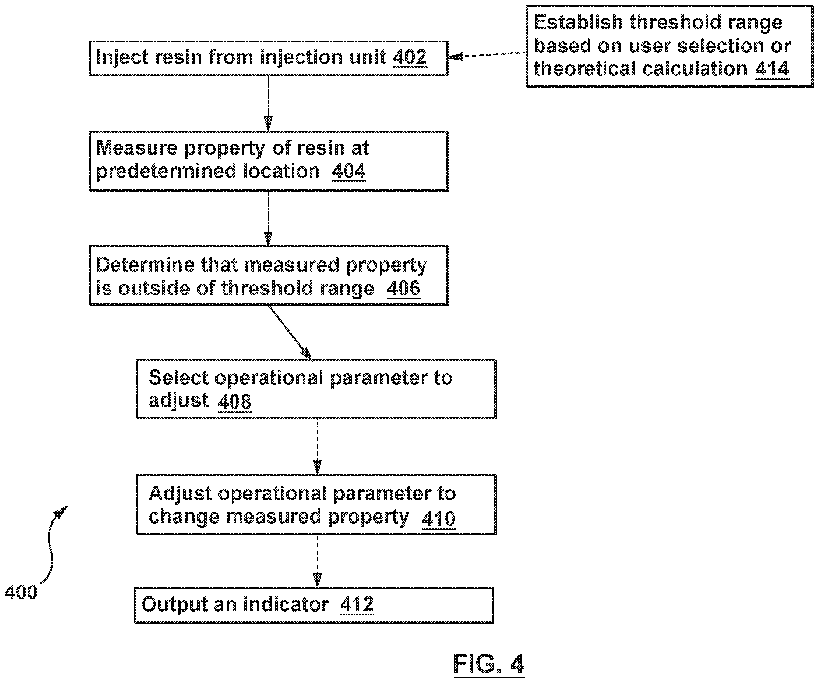

Figures 3A, 3B, 3C and 3D show the shooting pot 124 in isolation with the shooting pot plunger 132 in four different positions. The shooting pot 124 in Figures 3A, 3B, 3C, and 3D has a shooting pot housing 204 having a plunger end 302 and an outlet end 304. The shooting pot outlet 212 is defined at the outlet end 304 of the shooting pot housing 204. The shooting pot outlet 212 extends to or fluidly connects to an outlet passage 306 that is on the same linear axis as the reciprocal movement of the shooting pot plunger 132. In other embodiments, such as shown in Figure 2, the shooting pot outlet 212 is defined on a side wall of the shooting pot housing 204 so that it does not lead directly to an outlet passage that is on the same linear axis as the reciprocal movement of the shooting pot plunger 132. In the embodiment shown in Figure 3A, the outlet passage 306 leads to another passage that leads to the nozzle assembly 128 (not shown in Figures 3A, 3B, 3C, 4D). For example, the outlet passage 306 can lead to the injection melt passage 199 that passes through or is partially defined within the nozzle assembly 128.

In Figure 3A the shooting pot plunger 132 is retracted from the shooting pot housing 204. The retraction shown in Figure 3A may be the maximum amount of retraction, although in other embodiments, the maximum retraction of the shooting pot plunger 132 can be more or less than is shown. When the shooting pot plunger 132 is in the retracted position (Figure 3A), the shooting pot plunger 132 is not blocking the shooting pot inlet 206. This retracted position may also be identified as the "refill" position.

In Figure 3B the shooting pot plunger 132 is partially retracted from the shooting pot housing 204. In this partial retraction position, the shooting pot plunger 132 is blocking the shooting pot inlet 206. In other words, resin cannot pass into the shooting pot cavity 130 because the shooting pot plunger is blocking the way. This partially retracted position may also be identified as the "ready" position.

In Figure 3C the shooting pot plunger 132 is extended into the shooting pot housing 204. The shooting pot plunger 132 is blocking the shooting pot inlet 206 and is proximate to the shooting pot outlet 212. This extended position may also be identified as the "hold" position. In operation the shooting pot plunger 132 moves from a retracted position (e.g. the refill or ready position) to an extended position (e.g. the hold position). When the shooting pot plunger 132 is in the ready position and there is resin in the shooting pot cavity 130, the resin will be expelled out of the shooting pot outlet 212 when the shooting pot plunger 132 moves to the hold position.

The Figure 3D, the shooting pot plunger 132 is retracted slightly from the shooting pot outlet 212. A slight retraction of the shooting pot plunger from the shooting pot outlet 212 can lower or relieve the pressure on the resin that is in the injection circuit. The injection circuit can be the melt passage 126 that connects the injection unit 104 to the shooting pot cavity 130. The shooting pot plunger 132 is thus in a partially retracted position in Figure 3D. This partially retracted position can also be called the "decompression" position.

A shooting pot actuator (not shown) moves the shooting pot plunger 132 into each of the positions of Figures 3A, 3B, 3C and 3D. For example, the shooting pot actuator can move the shooting pot plunger 132 from the refill position to the ready position to the hold position and then to the decompression position with a predetermined motion profile.

In operation, when the shooting pot plunger 132 is in the refill position, resin enters through the shooting pot inlet 206 and into the shooting pot cavity 130 so as to fill the shooting pot cavity. While the resin is refilling the shooting pot cavity 130 the pressure on the resin in the shooting pot cavity 130 can be increasing (and thus the resin may compress). The shooting pot plunger 132 then moves to the ready position, causing further compression on the resin inside the shooting pot cavity 130 and blocking the shooting pot inlet 206. The shooting pot plunger 132 then extends to the hold positon and while doing so expels the resin out of the shooting pot cavity 130 and through the shooting pot outlet 212. The shooting pot plunger 132 can stay in the hold position while the mold assembly 108 is in the closed position. Then the shooting pot plunger 132 can retract to decompress the resin in the shooting pot cavity 130. The shooting pot plunger 132 can continue to retract to the ready position (blocking the shooting pot inlet 206) or, if the shooting pot cavity 130 is to be refilled, to the refill position.

In alternative configurations of the molding system 100, the shooting pot inlet 206 can be controlled by a valve that is separate and independent from the shooting pot plunger 132.

### Operation

Figure 4 shows a flowchart of an exemplary method 400 of refilling a shooting pot 124 in a molding system 100. The method 400 can be carried out or implemented using the control system 110. For example, instructions for carrying out the method can be stored on a memory associated with a processor of the control system 110. The method 400 can be used to refill the shooting pots 124 in the molding system 100 described in relation to Figures 1, 2, 3A, 3B, 3C and 3D. By way of further example, the method 400 can be performed by the control system 110 of the molding system 100 to refill the shooting pots 124 of the molding system 100. The method 400 can generally be carried out or implemented on or using a computers or processors associated with the molding system 100.

At 402, resin is injected from the injection unit 104 to refill (or fill) the shooting pot cavity 130. The resin can be disposed in an inlet in the hopper. The resin will then lead to the barrel of the injection unit 104 where it will be melted. The resin is the injected from the injection unit 104 by being expelled or forced out of the machine nozzle 122. The resin can be polyethylene terephthalate, for example. Other types of plastic resin can be used. When the resin is introduced into the molding system 100, such as when it is disposed in the hopper of the injection unit 104, the resin can be in a solid state (e.g. in the form of pellets). When the resin is ejected out of the injection unit 104 it is in a fluid state (i.e. melted or partially melted).

Injecting resin from the injection unit 104 can include injecting the resin into a refill melt passage 198. The refill melt passage 198 fluidly connects the injection unit 104 and the shooting pot cavity 130. For example the resin can be injected into a manifold that defines the refill melt passage 198. The refill melt passage 198 can branch and lead to a plurality of shooting pot cavities 130.

In some embodiments, the resin is injected into a plurality of refill melt passages 198, with each refill melt passage 198 fluidly connecting the injection unit 104 to at least one respective shooting pot cavity 130. For example, the refill melt passage 198 can be split by a splitter 202 so that the resin expelled from the machine nozzle 122 is split by the splitter 202 and travels to a plurality of separate refill melt passage 198.

At 404 a property of the resin is measured at a predetermined location in the molding system 100. In some embodiments, a sensor 150 can be used to measure or sense the property of the resin. In such embodiments, the predetermined location can be associated with on the location of the sensor 150. For example, the sensor 150 can be disposed within the molding system 100 to sense a property of the resin at the location where the sensor 150 is disposed; the location where the sensor 150 is disposed can be the predetermined location in the molding system 100.

The predetermined location in the molding system 100 can be any one of the injection melt passage 199, the refill melt passage 198, the shooting pot cavity 130 or a nozzle proximate a mold gate, for example. The nozzle proximate the mold gate can be a nozzle through which resin is ejected through the mold gate into the mold cavity 140. For example, the nozzle proximate the mold gate can be part of the nozzle assembly 128. There may be other predetermined locations in the molding system 100 at which the property of the resin is measured. For example, any location along the refill circuit, including within the injection unit 104 and including within the shooting pot 124 can be the predetermined location in the molding system 100 at which the property of the resin is measured.

Measuring a property of the resin can includes sensing a pressure of the resin at the predetermined location in the molding system 100. In such a case, the "property of the resin" is the pressure acting on the resin. A pressure sensor can be disposed at or proximate the predetermined location in the molding system 100 in order to sense the pressure of the resin. For example, a sensor 150 can be disposed within the refill melt passage 198 connecting the injection unit 104 to the shooting pot 124 in order to sense the pressure at that location of the refill melt passage 198. By way of further example, a sensor 150 can be disposed within the barrel of the injection unit 104 in order to sense or measure the pressure of the resin within the barrel of the injection unit 104. By way of further example, a sensor 150 can be disposed within a shooting pot cavity 130 in order to measure the pressure of the resin within the shooting pot cavity 130.

In some embodiments, injecting the resin (i.e. melted resin) from the injection unit 104 occurs while the pressure of the resin is being sensed. For example, the pressure of the resin at the predetermined location in the molding system 100, such as in a refill melt passage 198, injection melt passage 199, shooting pot cavity 130 or injection unit 104, can be measured or sensed at the same time that the injection unit 104 is injecting resin into the melt passage 126 or towards the one or more shooting pot cavity 130. The sensed pressure can be the pressure sensed from or acting on the resin as it flows past the pressure sensor which can be disposed at a predetermined location in the molding system 100.

In some embodiments, there are multiple sensors 150 in multiple respective predetermined locations of the molding system 100. Each of the multiple sensors 150 can be measuring the same property at the respective predetermined locations or one or more sensors 150 can be measuring different properties at the respective predetermined locations.

The predetermined location or multiple predetermined locations can be set by the manufacturer, such as by disposing each sensor 150 proximate the respective predetermined location of the molding system 100. Alternatively, the one or more predetermined location can be set by a user of the molding system 100, again by disposing each sensor 150 proximate the respective predetermined location of the molding system 100. Similarly, each predetermined location can be adjusted or changed, for example by moving the respective sensor 150.

In some embodiments, measuring a property of the resin includes measuring the flashing on a molded part. In such embodiments, the sensor 150 can be disposed proximate to the mold cavity 140 and the sensor 150 can be a temperature sensor, pressure sensor in the cavity or a vision system inspecting the parts after takeoff.

In some embodiments, measuring the property of the resin includes measuring a weight of a molded part. For example, after a part is molded out of resin in the mold cavity, the part is weighed. It is this weight that can be the measured property of the resin. In such embodiments, the one or more sensor 150 can be a scale or similar component for weighing the part. There can be a sensor 150 proximate to each mold cavity 140 (in the end of arm tool) in order to measure the weight of the molded part.

The sensor 150 can be configured or arranged to transmit measurements of the property (or data representative of such measurements) to one or more controller 152. This transmission can occur over a wireless communication network or through a wired connection. The controller 152 can be associated with or an operational part of a user interface 156. The sensor 150 can be set to automatically measure the property of the resin a specific time intervals or at predetermined times during each injection cycle. Such settings on the sensor 150 can be programmed through the user interface 156 of the controller 152 or can be manually programmed at the sensor 150.

At 406 it is determined that the measured property is outside of a threshold range for the property, the threshold range being associated with the predetermined location in the molding system 100.

In some embodiments, the sensor 150 transmits the measured property (or data representative of the measurement) to the controller 152. The controller 152 compares the measured property to a threshold range for the property. The controller 152 can determine whether the measured property is outside of the threshold range for the property based on this comparison. The threshold range for the property can be stored in a database 154 associated with the controller 152. The threshold range can be or can be representative of a target measurement of the property at the predetermined location in the molding system 100. By way of further example, the threshold range can be a target measurement of the property as a function of the time during an injection cycle. In yet a further example, the threshold range can be the target value for the property during an injection cycle, such a threshold range may be called a reference cycle. The threshold range can be upper and lower boundaries or limits around a target property value.

In some embodiments, determining that the measured property is outside of a threshold range included determining that the measured property is outside of the threshold range for a predetermined length of time. The predetermined length of time can be based on the time during a certain portion of an injection cycle. Or the predetermined length of time can be set by the controller 152, either automatically or by input through the user interface 156.

The predetermined length of time can be dependent on the rate of acquisition of data from measuring the property of the resin. The sensor 150 can operate by sensing or measuring the property of the resin at periodic instants in time. The rate of acquisition of data from measuring the property of the resin is the rate of these periodic measurements by the sensor 150.

Determining that the measured property is outside of the threshold range can occur during a monitoring time period. The monitoring time period can be a subset or window of time during an injection cycle. Thus, the determination of whether the measured property is outside of the threshold range can occur during a specific window of time during an injection cycle. This window of time or monitoring time period can be the same for multiple or each subsequent injection cycle.

The time data used by the controller 152 when comparing the measured property to the threshold range can be from the timer 158. The time from the timer 158 can be the time elapsed from the beginning of the injection cycle, for example.

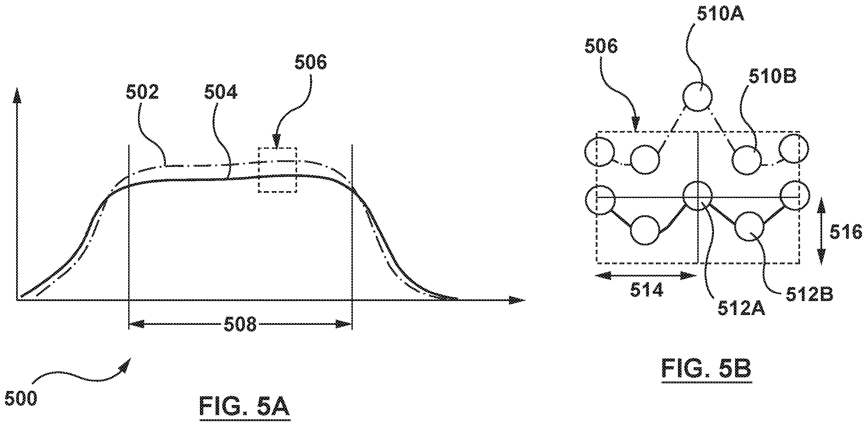

Figure 5A shows a graphical representation 500 of the measured property and the threshold range. Figure 5B shows a detailed view of the graphical representation 500 of Figure 5A. The graphical representations shown in Figures 5A and 5B can be representations that are displayed on the user interface 156 of the controller 152 during the operation of the molding system 100.

The y-axis of the graphical representation 500 is the value of the measured property (such as pressure, temperature, etc.) or the resin at the predetermined location of the molding system 100. The x-axis of the graphical representation 500 is the time during an injection cycle. The time can be in milliseconds, for example. The origin is the start time of the injection cycle or the injection trigger.

In other embodiments, the graphical representation 500 shows data obtained from more than one sensor 150 at more than one respective predetermined location in the molding system 100. For example, the graphical representation 500 can show an average of the measured property values received from multiple sensors 150 in the molding system 500.

Different graphical representations 500 can be selected for display on the user interface 156 of the controller 152. For example, graphical representations 500 showing measured property values for specific sensors 150 can be selected for display on the user interface 156 or on another display associated with the controller 152.

The data displayed on the graphical representation 500 includes the threshold data 504 and the measured property data 502. In the embodiments, shown on a screen the threshold data 504 is a target or reference value. In some embodiments, the threshold data 504 is a range of values.

The monitoring time period 508 is the time period or window during which the controller compares the threshold data 504 to the measured property data 502.

As is shown in detail in Figure 5B, the measured property data 502 includes a plurality of measured data points 510A, 510B measured throughout the injection cycle which are connected together in a line graph. Similarly, the threshold data 504 in the depicted embodiment shows threshold data points 512A, 512B. The threshold data points 512A, 512B can be target or ideal data points or can be reference data points measured on a previous injection cycle.

A determination of whether the measured property is outside of the threshold range can include determining whether one or more measured property data points 510A, 510B are within an acceptable range or whether they deviate an acceptable amount from the corresponding threshold data points 512A, 512B. The control system 110 can be programmed to base this determination on a predetermined number of measured property data points 510A, 510B within a specific time period during the injection cycle, for example. The acceptable range or the acceptable amount of deviation can be predetermined or programmed into the control system 110.

By way of example, a time tolerance 514 can be the length of time within which a measured property data point would have to be within the acceptable amount from the threshold data point in order to determine that the measured property is not outside of the threshold range. In the embodiment depicted in Figure 5B, the time tolerance accounts for two preceding and one following data point. By way of further example, a measured value threshold 516 can be the acceptable amount of difference that the measured property value can be from the threshold data point. For example, the measure value threshold 516 can represent the threshold range for a given measured property data point 510A, 510B.

With reference to Figure 4, optionally at 414 the threshold range is based on one or more of a user selected threshold range or a theoretical process calculation. For example, the user selected threshold range can be a reference injection cycle that includes reference or target values for the measured property of the resin. The reference injection cycle can be predetermined, can be selected based on the measured properties of the resin in one or more previous injection cycles. The theoretical process calculation can include a calculation from a shooting pot calculator, for example. The theoretical process calculation can be performed using transient computational fluid dynamics (or CFD) for predicting the pressure over time of a shooting pot refill pressure. In another example, the theoretical process calculation can include mold-filling analysis of the cavity filling.

The threshold range data, which is data representative of the threshold range and can be the threshold data 502 shown in Figures 5A and 5B, can be stored in a memory (e.g. the database 154) associated with the controller 152.

Establishing the threshold range 414 can be performed prior to injecting resin 402 from the injection unit 104. For example, establishing the threshold range 414 can be performed off-line such as when the molding system 100 is not operating.

An example of establishing the threshold range based on a user selection can include a user selecting a previous injection cycle to use as the threshold range for a future injection cycle. The acceptable deviations from the selected injection cycle can be predetermined or selected by user input, for example. The threshold range can be adjusted based on a design on engineering on the processing parameters where the response includes the part quality attributes such as the part dimensions. The range of processing parameters that produce good parts can then be used to specify the threshold range.

The threshold range can also be adjusted based on the type of resin injected by the injection unit 104. In some embodiments, the type of resin is input into the controller 152, such as through the user interface 156, and the controller 152 automatically adjusts the threshold range or threshold data 502 based on the type of resin.

The terms "threshold range" and "threshold data" 502 may be used interchangeably at certain sections of this document.

At 408 an operational parameter to adjust is selected. The operational parameter is associated with the measured property and the predetermined location in the molding system 100.

The selection 408 of the operational parameter to adjust can be made before the resin is injected 402 from the injection unit 104. Alternatively, the selection 408 of the operational parameter to adjust can occur after the resin is injected 402 from the injection unit 104, such as after it is determined 406 that the measured property is outside of the threshold range.

The database 154 can store a list of operational parameters for selection. The list stored in the database 154 can be an ordered list, ordered based on the priority. For example, the list can be ordered in the order of selection for the operational parameters. The operational parameters can be stored in association with specific times or ranges of times, such times or ranges of times during the injection cycle. The operational parameters can also be stored in association with specific predetermined locations in the molding system 100. These associations can be used to select the operational parameter based on the measured property.

In some embodiments, an operational parameter can be a rate of filling the shooting pot cavity 130. The rate of filling the shooting pot cavity 130 can be adjusted by adjusting the speed profile of the injection unit 104 (e.g. the speed at which the resin is ejected from the machine nozzle 122).

In some embodiments, an operational parameter can be a temperature of the resin in the injection unit 104. The operational parameter could also be the temperature of the resin in another location in the molding system 100. The controller 152 can be in communication with one or more heaters (not shown in the figures) in order to control the heat output of the heaters to adjust the temperature of the resin in respective locations in the molding system 100 (such as in the injection unit 104).

In some embodiments, an operational parameter can be a density of the resin in the molding system 100. The density of the resin in the molding system 100 can be adjusted by adjusting the shooting pot plunger 132, for example. The controller 152 can be in communication with the shooting pot plunger actuator in order to adjust the shooting pot plunger 132.

The operational parameters can be associated with or linked to measured properties of the resin in one or more locations of the molding system 100.

Optionally, at 410 the selected operational parameter is adjusted to change the measured property of the resin at the predetermined location in the molding system 100. For example, the controller 152 can automatically select 408 the operational parameter, such as from an ordered list in the database 154, and can then automatically adjust the operational parameter. The operational parameter can be adjusted while the resin is injected from the injection unit 104, depending on what the operational parameter is. Similarly, the operational parameter can be adjusted after the end of the injection cycle or before the beginning of the next injection cycle.

In an example implementation, the measured property is the pressure in the shooting pot cavity 130 during a specific time range in the injection cycle. The controller 152 selects the rate of filling the shooting pot cavity 130 as the operational parameter to adjust. The controller 152 then slows down the rate of filling the shooting pot cavity 130 during the same injection cycle. Alternatively (or additionally), the controller 152 automatically adjusts the rate of filling of the shooting pot cavity 130 for the next (and subsequent) injection cycles. This rate of filling of the shooting pot cavity 130 can be adjusted by adjusting the operation of the injection unit 104, for example.

In some embodiments, the operational parameter is a volume of resin in a filled shooting pot cavity 130. Such an operational parameter can be associated with the pressure of the resin in one or more locations in the molding system 100. Adjusting the volume of resin in the shooting pot cavity 130 to increase the volume can be performed by retracting the shooting pot plunger 132 a relatively greater amount or injecting more resin through the machine nozzle 122, for example. Adjusting the volume of resin in the shooting pot cavity 130 to decrease the volume of resin in the shooting pot cavity 130 can be performed by blocking the shooting pot inlet 206 of the shooting pot cavity 130 after a predetermined volume of resin has entered the shooting pot cavity 130. A valve (or the shooting pot plunger 132 itself) can be used to block or unblock the shooting pot inlet 206.

After an adjustment to the operational parameter is made, or after the controller 152 determines that an adjustment to the operational parameter is to be made the adjustment determination can be stored for use in subsequent injection cycles, or the adjustment can be maintained or automatically performed in subsequent injection cycles.

The quantity of the adjustment of the operational parameter can be predetermined (e.g. by manual input) prior to the injection cycle or prior to the operation of the molding system 100 or calculated automatically based on the difference of the sensed parameter and the threshold.

In some embodiments, the selected operational parameter is the volume of resin in a filled shooting pot cavity 130. Adjusting the volume of resin includes blocking a shooting pot inlet 206 of the shooting pot cavity 130 after a predetermined volume of resin has entered the shooting pot cavity 130. In such embodiments, the measured property can be the pressure sensed in the shooting pot cavity 130. For example, the controller 152 may have determined that the sensed pressure is outside of the threshold range due to the sensed pressure being too high. The controller 152 then can adjust the volume of melt that enters the shooting pot cavity 130 (e.g. in the next injection cycle).

Optionally, at 412, and indicator can be output indicating that the measured property is outside of the threshold range. The indicator can be output after the operational parameter is selected for adjustment 408, or the indicator can be output after it is determined that the measured property is outside of the threshold range. The indicator can be output after the completion of the injection cycle or during the injection cycle, for example.

In some embodiments, outputting 412 an indicator includes outputting information associated with the operational parameter on a display. The display can be on the controller 152 or can be remote from the controller 152. The information that is output can include data showing the measured property or the threshold range or both. For example, the information that is output can be the graphical representation 500 shown in Figures 5A and 5B. The information that is output can include a recommended adjustment, such as an operational parameter that is recommended for adjustment on a future injection cycle.

In some embodiments, outputting 412 an indicator includes outputting an audible alarm. For example, the audible alarm can be a bell. In some embodiments, outputting 412 an indicator includes outputting a visual alarm. For example, the visual alarm can be a light or colored light. The alarm can be output in response to determining that the measured property is outside of a threshold range.

In some embodiments, the injection cycle can be stopped when the measured property is outside of the threshold range. For example, there may be faulty parts that can be removed while the injection cycle is stopped.

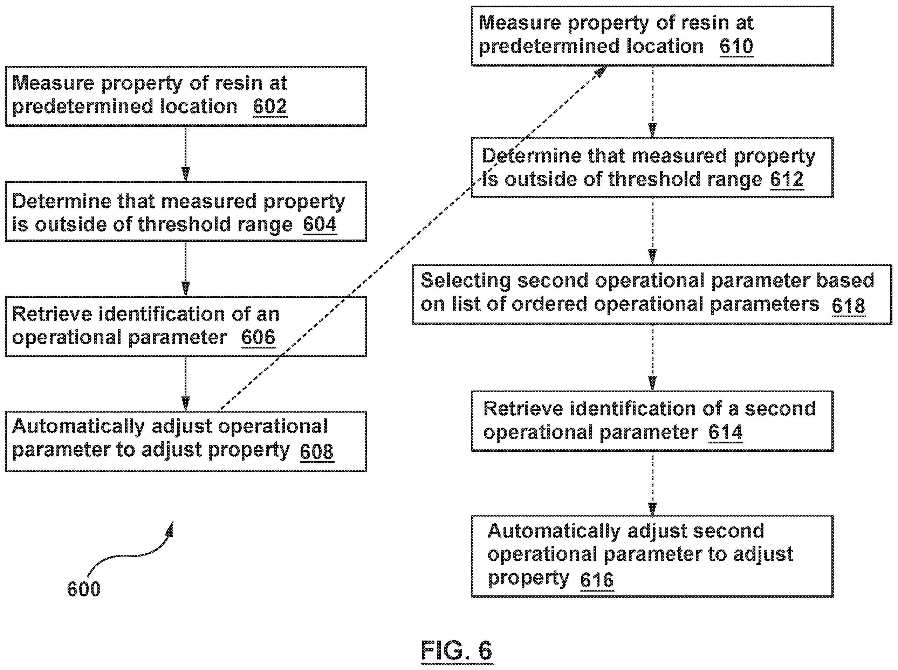

Figure 6 shows method 600 of automatically adjusting an operational parameter during the refill of a shooting pot 124 in a molding system 100.

At 602 a property of resin at a predetermined location in the molding system 100 is measured. Measuring 602 the property of the resin at a predetermined location can occur while the resin is injected from the injection unit 104.

The property that is measured is measured by the sensor 150 or other measurement device at the predetermined location in the molding system 100.

At 604 it is determined that the measured property is outside of a threshold range. The threshold range can be associated with the predetermined location in the molding system 100.

At 606 an identification of an operational parameter is retrieved from a database. The operational parameter can be associated with the measured property. For example, the operational parameter can be retrieved from the database 154 associated with the controller 152 or from another memory associated with the controller 152. The operational parameter can be associated with the measured property or threshold range, for example.

At 608 the operational parameter is automatically adjusted to adjust the property at the predetermined location in the molding system 100. Adjusting the operational parameter can occur during an injection cycle or can be programmed to occur during a subsequent injection cycle, for example. For example, adjusting the operational parameter can occur during the same injection cycle in which the property of the resin is measured.

Optionally, the following steps (610, 612, 618, 614, 616) can be performed during a second injection cycle. The second injection cycle occurs subsequent to the injection cycle in which steps 602, 604, 606 and 608 occurred.

At 610, the property of the resin is measured at the predetermined location in the molding system 100. The property of the resin that is measured can be the same property that was measured at 602 in the previous injection cycle. Similarly, the predetermined location in the molding system 100 in which the property of the resin is measured can be the same predetermined location in the molding system 100 in which the property of the resin was measured at 602 in the previous injection cycle.

For example, measuring 610 the property of the resin includes sensing a pressure of the resin at the predetermined location in the molding system 100.

The predetermined location in the molding system 10 can be in the melt passage 126 fluidly connecting the injection unit 104 with the shooting pot cavity 130. For example, the predetermined location can be a specific portion of the melt passage 126.

The predetermined location in the molding system 10 can be in the shooting pot cavity 130. For example a sensor 150, such as a pressure sensor, can be disposed within the shooting pot cavity 130 in order to measure the pressure of the resin.

The predetermined location in the molding system 10 can be a nozzle proximate to a mold gate. For example, the predetermined location can be within the nozzle assembly 128.

At 612, it is determined that the measured property is outside of the threshold range. This determination can be performed by the controller 152. The threshold range can be stored in a memory (e.g. the database 154) associated with the controller 152. The threshold range can be retrieved by the controller 152 and compared to the measured property. The threshold range can be stored in the memory in association with the predetermined location, time during the injection cycle, or the measured property, for example.

In some embodiments, determining that the measured property is outside of the threshold range includes determining that the measured property is outside of the threshold range for a predetermined length of time. The predetermined length of time can be dependent on the rate of acquisition of data from measuring the property of the resin. The rate of acquisition of data from measuring the property of the resin can be the rate at which the sensor 150 obtains measured property data from the resin.

In some embodiments, determining that the measured property is outside of a threshold range occurs during a monitoring time period 508. The monitoring time period 508 can be a specific segment or specific segments of time during the injection cycle.

Measuring a property of the resin can include measuring the flashing on a molded part.

At 614, the identification of a second operational parameter is retrieved from the database 154. The second operational parameter is associated with the measured property. The second operational parameter can be the same as or different from the operational parameter retrieved 606 in the previous injection cycle.

In some embodiments, optionally, at 618 the second operational parameter is selected based on a predefined list of ordered operational parameters. The predefined list of ordered operational parameters can be stored in the database 154 in association with the measured property. The list can be ordered based on priority or on probability of adjusting the measured property back to within the threshold range, for example.

The second operational parameter can be a rate of filing the shooting pot cavity 130, a temperature of the resin in the injection unit 104, a hold pressure in the injection unit, or a density of the resin, for example.

The second operational parameter can be associated with a time during the injection cycle. For example, the second operational parameter can be a temperature of the resin in the injection unit 104 over the first 3 milliseconds of the injection cycle.

The second operational parameter can be a volume of resin in a filled shooting pot cavity 130. In such embodiments, adjusting the volume of resin includes blocking a shooting pot inlet 206 of the shooting pot cavity 130 after a predetermined volume of resin has entered the shooting pot cavity 130.

At 616, the second operational parameter is automatically adjusted to adjust the property of the resin at the predetermined location in the molding system 100.

In situations in which the operational parameter is the same as the second operational parameter, the adjustment 608 of the operational parameter may be an adjustment by a predetermined incremental amount and the adjustment 616 of the second operational parameter may be a further adjustment by the predetermined incremental amount.

The method 400 of refilling a shooting pot 124 in a molding system 100 and the method 600 of automatically adjusting an operational parameter during the refill of a shooting pot 124 in a molding system 100 can also include establishing the threshold range based on a user selected threshold range or a theoretical process calculation.

The threshold range can also be established based on a geographic location of the molding system 100.

The threshold range can also be established based on a type of resin injected by the injection unit. The threshold range can also be established based on environmental conditions within which the molding system 100 operates.

The threshold data 502 (representing the threshold range) can be stored in the database 154.

The methods 400, 600 described above can be implemented in molding systems 100 that include more than one shooting pots 124. The methods 400, 600 a can be performed independently on the different shooting pots 124 in the molding system 100 so that different shooting pots 124 in the molding system 100 can be refilled to different conditions.

Other non-limiting embodiments, modifications and equivalents will be evident to one of ordinary skill in the art in view of the present disclosure.

## Claims

1. A method (400) of filling a shooting pot cavity in a molding system, the method comprising:
injecting (402) resin from an injection unit into a refill melt passage, which fluidly connects the injection unit (104) and the shooting pot cavity (130), to fill the shooting pot cavity (130);
measuring (404) a property of the resin at a predetermined location in the molding system;
determining (406) that the measured property is outside of a threshold range for the property, the threshold range being associated with the predetermined location;
selecting (408) an operational parameter to adjust, the operational parameter associated with the measured property and the predetermined location, wherein the operational parameter comprises a volume of resin in a filled shooting pot cavity (130); and
adjusting (410) the volume of resin to change the measured property of the resin at the predetermined location;
wherein measuring (404) a property of the resin comprises
sensing a pressure of the resin at the predetermined location.

2. The method of claim 1, wherein adjusting (410) the volume of resin comprises blocking a refill inlet of the shooting pot cavity (130) after a predetermined volume of resin has entered the shooting pot cavity.

3. The method of claim 1 or claim 2 comprising adjusting one or more further operational parameters comprising one or more of: a rate of filling the shooting pot cavity (130); a temperature of the resin in the injection unit (104); a hold pressure in the injection unit (104); and a density of the resin.

4. The method of any one of claims 1 to 3, wherein the operational parameter is associated with a time during an injection cycle.

5. The method of any one of claims 1 to 4, wherein the predetermined location in the molding system (100) is any one of: the melt passage (198); the shooting pot cavity (130); and a nozzle proximate a mold gate.

6. The method of any one of claims 1 to 5, further comprising: storing threshold range data in a memory (154), the threshold range data representing the threshold range.

7. The method of any one of claims 1 to 6 wherein determining (406) that the measured property is outside of a threshold range comprises determining that the measured property is outside of a threshold range for a predetermined length of time.

8. The method of any one of claims 1 to 7, wherein the resin is injected into a plurality of melt passages (198), each melt passage fluidly connecting the injection unit (104) to at least one respective shooting pot cavity (130).

9. A method of any one of claims 1 to 8 further comprising:
retrieving (606) the identification of the operational parameter(s) from a database; and
automatically (608) adjusting, during the refill of a shooting pot during an injection cycle, the operational parameter(s) to adjust the property at the predetermined location.

10. The method of claim 9 further comprising, during a second injection cycle:
measuring (610) the property of the resin at the predetermined location in the molding system;
determining (612) that the measured property is outside of the threshold range;
retrieving (614) the identification of a second of the operational parameters from the database, the second operational parameter associated with the measured property; and
automatically adjusting (616) the second operational parameter to adjust the property of the resin at the predetermined location.

11. The method of claim 10, wherein the predetermined location in the molding system 100 is any one of: a melt passage (198) fluidly connecting an injection unit with the shooting pot cavity; the shooting pot cavity (130); and a nozzle proximate a mold gate.

12. The method of claim 10, further comprising: establishing the threshold range based on one or more of a user selected threshold range or a theoretical process calculation and storing the threshold range data in the database (154).

13. A control system (110) for controlling a refill of a shooting pot cavity (130) in a molding system (100), the control system comprising:
a sensor (150) for measuring a property of the resin at a predetermined location of the molding system;
a database (154); and
a controller (152) connected to the sensor and to the database, the controller configured to execute instructions stored on a memory to perform the method of any one of claims 1-12.

## Patentansprüche

1. Verfahren (400) zum Füllen eines Spritztopfhohlraums in einem Spritzgießsystem, wobei das Verfahren umfasst:
Einspritzen (402) von Harz von einer Einspritzeinheit in einen Nachfüll-Schmelzedurchgang, der fluidmäßig die Einspritzeinheit (104) und den Spritztopfhohlraum (130) verbindet, um den Spritztopfhohlraum (130) zu füllen;
Messen (404) einer Eigenschaft des Harzes an einer vorbestimmten Stelle in dem Spritzgießsystem;
Bestimmen (406), ob die gemessene Eigenschaft außerhalb eines Schwellenbereichs für die Eigenschaft liegt, wobei der Schwellenbereich mit der vorbestimmten Stelle assoziiert ist;
Auswählen (408) eines einzustellenden Betriebsparameters, wobei der Betriebsparameter mit der gemessenen Eigenschaft und der vorbestimmten Stelle assoziiert ist, wobei der Betriebsparameter ein Harzvolumen in einem gefüllten Spritztopfhohlraum (130) umfasst; und
Einstellen (410) des Harzvolumens, um die gemessene Eigenschaft des Harzes an der vorbestimmten Stelle zu verändern;
wobei das Messen (404) einer Eigenschaft des Harzes das Erfassen eines Drucks des Harzes an der vorbestimmten Stelle umfasst.

2. Verfahren nach Anspruch 1, wobei das Einstellen (410) des Harzvolumens das Blockieren eines Nachfülleinlasses des Spritztopfhohlraums (130) umfasst, nachdem ein vorbestimmtes Harzvolumen in den Spritztopfhohlraum eingetreten ist.

3. Verfahren nach Anspruch 1 oder Anspruch 2, umfassend das Einstellen eines oder mehrerer weiterer Betriebsparameter, die einen oder mehrere der folgenden umfassen: eine Füllungsrate des Spritztopfhohlraums (130); eine Temperatur des Harzes in der Einspritzeinheit (104); einen Haltedruck in der Einspritzeinheit (104); und eine Dichte des Harzes.

4. Verfahren nach einem der Ansprüche 1 bis 3, wobei der Betriebsparameter mit einer Zeit während eines Einspritzzyklus assoziiert ist.

5. Verfahren nach einem der Ansprüche 1 bis 4, wobei die vorbestimmte Stelle in dem Spritzgießsystem (100) eine der folgenden ist: der Schmelzedurchgang (198); der Spritztopfhohlraum (130); und eine Düse in der Nähe eines Formangusses.

6. Verfahren nach einem der Ansprüche 1 bis 5, ferner umfassend: das Speichern von Schwellenbereichsdaten in einem Speicher (154), wobei die Schwellenbereichsdaten den Schwellenbereich darstellen.

7. Verfahren nach einem der Ansprüche 1 bis 6, wobei das Bestimmen (406), ob die gemessene Eigenschaft außerhalb eines Schwellenbereichs für die Eigenschaft liegt, das Bestimmen umfasst, ob die gemessene Eigenschaft über eine vorbestimmte Zeitdauer außerhalb eines Schwellenbereichs liegt.

8. Verfahren nach einem der Ansprüche 1 bis 7, wobei das Harz in eine Vielzahl von Schmelzedurchgängen (198) eingespritzt wird, wobei jeder Schmelzedurchgang fluidmäßig die Einspritzeinheit (104) mit zumindest einem jeweiligen Spritztopfhohlraum (130) verbindet.

9. Verfahren nach einem der Ansprüche 1 bis 8, ferner umfassend:
Abfragen (606) der Identifikation des/der Betriebsparameter aus einer Datenbank; und automatisches Einstellen (608) des/der Betriebsparameter während der Nachfüllung eines Spritztopfs während eines Einspritzzyklus, um die Eigenschaft an der vorbestimmten Stelle einzustellen.

10. Verfahren nach Anspruch 9, ferner umfassend während eines zweiten Einspritzzyklus:
Messen (610) der Eigenschaft des Harzes an der vorbestimmten Stelle in dem Spritzgießsystem;
Bestimmen (612), ob die gemessene Eigenschaft außerhalb des Schwellenbereichs liegt;
Abfragen (614) der Identifikation eines zweiten der Betriebsparameter aus der Datenbank, wobei der zweite Betriebsparameter mit der gemessenen Eigenschaft assoziiert ist; und
automatisches Einstellen (616) des zweiten Betriebsparameters, um die Eigenschaft des Harzes an der vorbestimmten Stelle einzustellen.

11. Verfahren nach Anspruch 10, wobei die vorbestimmte Stelle in dem Spritzgießsystem 100 eine beliebige der folgenden ist: ein Schmelzedurchgang (198), der fluidmäßig eine Einspritzeinheit mit dem Spritztopfhohlraum verbindet; der Spritztopfhohlraum (130); und eine Düse in der Nähe eines Formangusses.

12. Verfahren nach Anspruch 10, ferner umfassend:
Festlegen des Schwellenbereichs auf Grundlage eines oder mehrerer von einem benutzergewählten Schwellenbereich oder einer theoretischen Prozessberechnung, und Speichern der Schwellenbereichsdaten in der Datenbank (154).

13. Steuersystem (110) zum Steuern der Nachfüllung eines Spritztopfhohlraums (130) in einem Spritzgießsystem (100), wobei das Steuersystem umfasst:
einen Sensor (150) zum Messen einer Eigenschaft des Harzes an einer vorbestimmten Stelle des Spritzgießsystems;
eine Datenbank (154); und
ein Steuergerät (152), das mit dem Sensor und mit der Datenbank verbunden ist, wobei das Steuergerät dazu ausgestaltet ist, Anweisungen auszuführen, die in einem Speicher gespeichert sind, um das Verfahren nach einem der Ansprüche 1 bis 12 durchzuführen.

## Revendications

1. Procédé (400) de remplissage d'une cavité de pot d'injection dans un système de moulage, le procédé comprenant :
l'injection (402) d'une résine à partir d'une unité d'injection dans un passage de fusion de remplissage, qui relie fluidiquement l'unité d'injection (104) et la cavité de pot d'injection (130), pour remplir la cavité de pot d'injection (130) ;
la mesure (404) d'une propriété de la résine à un emplacement prédéterminé dans le système de moulage ;
la détermination (406) du fait que la propriété mesurée se trouve à l'extérieur d'une plage seuil de la propriété, la plage seuil étant associée à l'emplacement prédéterminé ;
la sélection (408) d'un paramètre opérationnel à régler, le paramètre opérationnel étant associé à la propriété mesurée et à l'emplacement prédéterminé, dans lequel le paramètre opérationnel comprend un volume de résine dans une cavité de pot d'injection (130) remplie ; et
le réglage (410) du volume de résine pour modifier la propriété mesurée de la résine à l'emplacement prédéterminé ;
dans lequel la mesure (404) d'une propriété de la résine comprend
la détection d'une pression de la résine à l'emplacement prédéterminé.

2. Procédé de la revendication 1, dans lequel le réglage (410) du volume de résine comprend le blocage d'une entrée de remplissage de la cavité de pot d'injection (130) après qu'un volume prédéterminé de résine est entré dans la cavité de pot d'injection.

3. Procédé de la revendication 1 ou 2, comprenant le réglage d'un ou plusieurs autres paramètres opérationnels comprenant un ou plusieurs parmi : un taux de remplissage de la cavité de pot d'injection (130) ; une température de la résine dans l'unité d'injection (104) ; une pression de maintien dans l'unité d'injection (104) ; et une densité de la résine.

4. Procédé de l'une quelconque des revendications 1 à 3, dans lequel le paramètre opérationnel est associé à un temps pendant un cycle d'injection.

5. Procédé de l'une quelconque des revendications 1 à 4, dans lequel l'emplacement prédéterminé dans le système de moulage (100) est l'un quelconque parmi : le passage de fusion (198) ; la cavité de pot d'injection (130) ; et une buse à proximité d'une grille de moule.

6. Procédé de l'une quelconque des revendications 1 à 5, comprenant en outre : le stockage de données de plage seuil dans une mémoire (154), les données de plage seuil représentant la plage seuil.

7. Procédé de l'une quelconque des revendications 1 à 6, dans lequel la détermination (406) du fait que la propriété mesurée se trouve à l'extérieur d'une plage seuil comprend la détermination du fait que la propriété mesurée se trouve à l'extérieur d'une plage seuil pendant une durée prédéterminée.

8. Procédé de l'une quelconque des revendications 1 à 7, dans lequel la résine est injectée dans une pluralité de passages de fusion (198), chaque passage de fusion reliant fluidiquement l'unité d'injection (104) à au moins une cavité de pot d'injection respective (130).

9. Procédé de l'une quelconque des revendications 1 à 8, comprenant en outre :
la récupération (606) de l'identification du ou des paramètres opérationnels à partir d'une base de données ; et
le réglage automatique (608), pendant le remplissage d'un pot d'injection pendant un cycle d'injection, de (s) paramètre(s) opérationnel(s) pour régler la propriété à l'emplacement prédéterminé.

10. Procédé de la revendication 9 comprenant en outre, pendant un deuxième cycle d'injection :
la mesure (610) de la propriété de la résine à l'emplacement prédéterminé dans le système de moulage ;
la détermination (612) du fait que la propriété mesurée se trouve à l'extérieur de la plage seuil ;
la récupération (614) de l'identification d'un deuxième paramètre des paramètres opérationnels à partir de la base de données, le deuxième paramètre opérationnel étant associé à la propriété mesurée ; et
le réglage automatique (616) du deuxième paramètre opérationnel pour régler la propriété de la résine à l'emplacement prédéterminé.

11. Procédé de la revendication 10, dans lequel l'emplacement prédéterminé dans le système de moulage 100 est l'un quelconque parmi : un passage de fusion (198) reliant fluidiquement une unité d'injection à la cavité de pot d'injection ; la cavité de pot d'injection (130) ; et une buse à proximité d'une grille de moule.

12. Procédé de la revendication 10, comprenant en outre : l'établissement de la plage seuil sur la base d'un ou plusieurs parmi une plage seuil sélectionnée par un utilisateur ou un calcul de procédé théorique et le stockage des données de plage seuil dans la base de données (154) .

13. Système de commande (110) pour commander un remplissage d'une cavité de pot d'injection (130) dans un système de moulage (100), le système de commande comprenant :
un capteur (150) pour mesurer une propriété de la résine à un emplacement prédéterminé du système de moulage ;
une base de données (154) ; et
un dispositif de commande (152) relié au capteur et à la base de données, le dispositif de commande étant configuré pour exécuter des instructions stockées sur une mémoire pour mettre en œuvre le procédé de l'une quelconque des revendications 1 à 12.
